# EUROPEAN PATENT SPECIFICATION

(11) **EP 1 660 391 B1**
(45) Date of publication and mention of the grant of the patent: **11.04.2007**
(21) Application number: 04774886.8
(22) Date of filing: 16.08.2004
(51) Int. Cl.: B65G 17/12, B07C 5/18, B65G 17/06

(54) **APPARATUS FOR WEIGHING AND CONVEYING OBJECTS**
VORRICHTUNG ZUM WIEGEN UND BEFÖRDERN VON OBJEKTEN
APPAREIL PERMETTANT DE PESER ET DE TRANSPORTER DES OBJETS

(30) Priority: 18.08.2003 EP 03077600
(43) Date of publication of application: 31.05.2006
(73) Proprietor: FPS Food Processing Systems B.V., 2631 RE Nootdorp (NL)
(72) Inventor: VAN DEN BERG, Wouter, NL-2272 HA Voorburg (NL); VAN WIJNGAARDEN, Erik, NL-7558 WL Hengelo (NL)
(74) Representative: van Loon, C.J.J.
(86) International application number: PCT/NL2004/000579
(87) International publication number: WO 2005/016798

(56) References cited:
- EP-A- 0 540 126
- US-A- 4 583 636
- US-A- 4 817 744

## Description

The present invention relates to a diabolo roller conveyor and to an apparatus provided with such a diabolo roller conveyor.

Such an apparatus is known from US 4817744. In this document, a fruit sorting machine is described in which, between two endless conveyor chains parallel in a vertical plane, diabolos are attached which serve for supporting the fruits to be conveyed. The diabolos convey the fruits in pairs, more specifically so that each diabolo can only support one single product. The axles for the diabolos connected to the chains run through vertical axle slots. This allows the diabolos to rotate when the axles are in the central axle hole part. On the other hand, when the diabolos are being raised via a centrally arranged weighing guide part, the axles then being moved along upwards in the axles slots, the fruits, located on two diabolos together with these diabolos, can be passed over a weighing cell and the joint weight of these two diabolos and of the conveyed fruit can be determined. Although the advantage hereof is that for rotating as well as for weighing the same elements can be used, it has to be noted that, on the other hand, at most half of the conveying part of the chain can be used. When, furthermore, the generally known fact is taken into account that the degree of filling of such machines is seldom higher than sixty percent, it will be clear to anyone that the efficiency of such a machine is low.

In order to, on the one side, remedy these problems and, on the other side, maintain the advantages of this compact set up, the invention provides a diabolo roller conveyor provided with rotation axles with diabolo rollers mounted thereon, each diabolo roller being divided into two diabolo roller halves by an imaginary dividing plane in which the rotation axle too extends, a locking element being provided which has a locked position and a releasing position, while each diabolo roller halve is connected to the rotation axle via at least one weighing guide element such that in the releasing position this allows an independent movement of each diabolo roller half parallel to the imaginary plane and perpendicular to the rotation axle for the purpose of weighing an object located on the respective diabolo roller half and that in a locked position, the two diabolo roller halves are intercoupled and are rotatably drivable through rotation of the rotation axle.

With great advantage, the diabolo rollers are now used both for weighing and rotating, thereby gaining considerable efficiency with respect to the above-described construction, while, moreover, material can be saved. The fact is that between each pair of successive diabolo rollers an object to be weighed can be received. By dividing the rollers into two halves, independent weighing is still possible.

In a further elaboration, the diabolo roller conveyor is characterized in that the weigh guiding elements comprise at least a single pivot arm which is connected to, on the one side, an above-mentioned half, and, on the other side, to a rotation axle common for both halves, more in particular that during weighing, the pivot arm is horizontal.

It is noted that NL 8204328 shows a so-called cup sorter in which the conveying element, i.e. the cup, is connected to the chain by means of a U-shaped bracket. It allows the cup to be dragged over a weighing cell such that an accurate weighing of cup with conveyed product is obtained. However, the combination of conveying on the one path and rotating with the same conveying element on a different path is not possible with this construction.

On the other side, it is known that in the case of roller conveyors, according to, for instance, EP 540126, additional weighing ejecting elements are inserted between successive rollers. In this manner, the objects can be rotated when resting on the rollers and be weighed on a different part of the conveying path, and thereupon be ejected when located on only the weighing ejecting elements.

In a still further elaboration, the diabolo roller conveyor is characterized in that when rotating, the halves are interlocked with the aid of a locking element while the halves are centered.

With great advantage, in this manner, an improved rotation is obtained when passing inspection cameras.

In a still further elaboration, the diabolo roller conveyor is characterized in that the locking element is a fitting element comprising a central axle shaft which, when locking, is slid over the rotation axle and is inserted into the halves, while a fitting end fits in matching locking cavity halves of matching halves, while these halves are pressed together and are locked in a position centered relative to each other. More in particular, the fitting end comprises a truncated, four-sided pyramid, tapering towards the end or a truncated oval cone tapering towards the end.

What is achieved in an advantageous manner is that such form combinations produce a friction such that the mutual positions of the halves are always maintained so that, when rotating and hence when recording images of the products to be conveyed, these objects or products will make no undesired movements.

In a special embodiment, the fitting element is held in locked position by a clamping spring, pressing against the axle shaft in the direction of the rotation axle.

To this end it holds that in a suitable manner, from the sides of the conveyor, the locking element can be inserted into and held in the correct position in the two halves.

The invention also provides an apparatus provided with a diabolo roller conveyor according to the invention, wherein the apparatus comprises a weighing cell over which the diabolo rollers, provided with supporting elements, are guided by the supporting elements, while the locking element of a respective diabolo roller is in the releasing position when a diabolo roller is guided over the weighing cell and the locking element is in the locked position when rotation of the diabolo roller is required.

In a suitable manner, after being joined and locked to form one whole, the conveying elements are passed over a weighing cell in the correct position.

The present invention will be elucidated with reference to a drawing. In the drawing:
Fig. 1 shows in perspective view the apparatus according to the invention for the situation in which both halves are centered;
Figs. 2A-2D show a number of parts of the apparatus according to the invention,
Fig. 3 shows how the parts according to Figs. 2A-2B fit together,
Fig. 4 shows in perspective view the halves locked to form one diabolo, and
Fig. 5 shows the situation in which the diabolo halves are led to a weighing cell.

In the different Figures, the same parts have the same reference numerals.

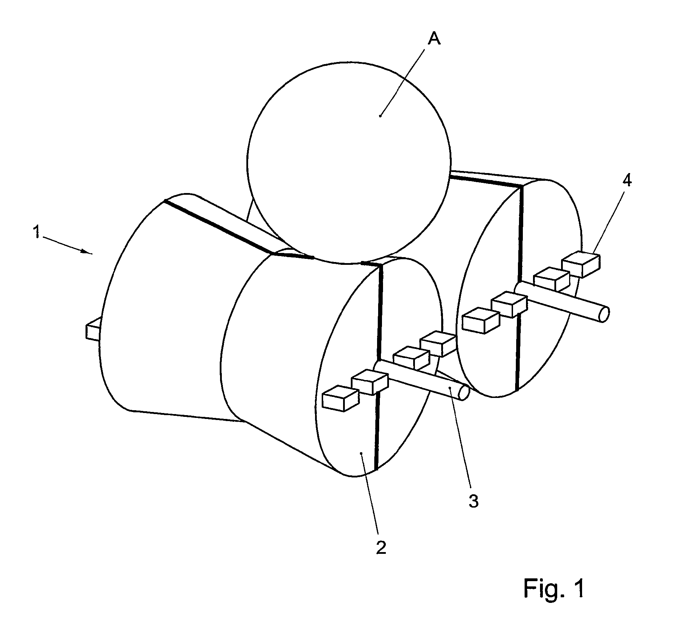

In the elaboration of the apparatus 1 according to the invention as represented in Fig. 1, an article, object or product A lies on two diabolos between which a conveying position is formed. Each diabolo is built up from two halves 2 and the two halves are connected to the same rotation axle 3. These rotation axles 3, generally of horizontal direction, form the connection with an endless conveyor (not shown), for instance a conveyor chain around two end wheels, of which at least one is connected to a driving motor. Such a machine is typically used as sorting machine with which the products carried along undergo all sorts of tests such as weighing, form definition and color definition, then labelling, electronically or physically, and, finally, being discharged onto discharge and packaging conveyors.

In particular, according to the present invention, a construction is conceived with which articles, carried along in diabolos divided into two halves, can be rotated as well as weighed. In the technical field of sorting fruit, both treatments are of the utmost importance. First of all rotation, because it must be possible to inspect fruit from all sides as to color and imperfections, and then weighing, for combining products with the correct weights when packaging. By dividing the diabolos in two and providing them internally with the proper parts, all positions-between diabolos can be used for both operations.

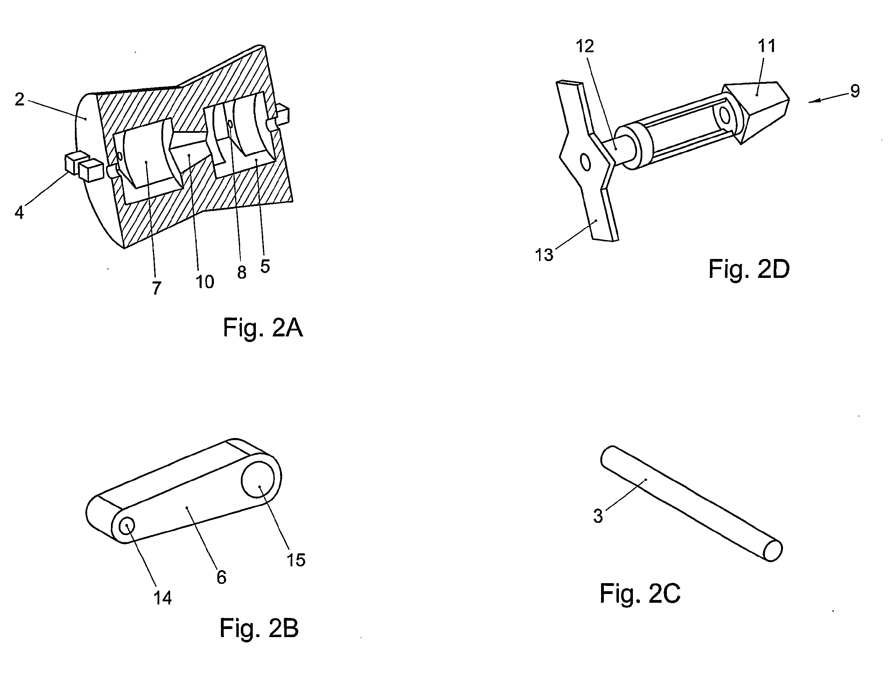

In Figs. 2A-2D, the parts are represented:
in Fig. 2a one diabolo half with all parts attached thereto as well as cut out portions, and therefore to be considered as one single piece of material;
in Fig. 2B an essential connecting element between one diabolo half and a rotation axle, i.e. a pivot arm 6;
in Fig. 2C a rotation axle 3; and
in Fig. 2D a locking element 9 serving for locking the two halves 2 such that the two halves will be centered and maintained centered and hence will function as one single diabolo so that a reliable rotation of the products A is obtained.

In Fig. 2A, a diabolo half 2 is shown, with two recesses, pivot arm cavities 7 therein, for accordingly including two pivot arms 6 therein. More in particular, in these cavities 7, pivot arm axle cavities 8 are present in which axles are included which connect a pivot arm 6 for rotation to a diabolo half 2.

Further, in the embodiment shown, on each side of a diabolo half 2, two supporting elements 4 have been provided for directing and passing over a weighing cell a diabolo consisting of two halves 2. Furthermore, in Fig. 2A, in the inside of the diabolo half 2, a locking cavity half 10 is indicated. It provides space to half of a fitting end 11 of the locking element 9. Finally, diabolo axle holes 5 are noted, at least half thereof, through which the rotation axle 3 is inserted.

In Fig. 2B, a pivot arm 6 is shown in more detail. On the two ends of the main body or the arm a pivot arm axle hole 14 and a diabolo axle guide 15 are present. In combination with the above, it will be clear that the end with hole 14 is located in the inside of half 2 at the location of the pivot arm axle hole and, there, is rotatably connected to half 2, while axle guide 15 fits around the rotation axle 3. It will be clear that by means of the two arms 6, one half 2 is connected via the rotation axle to the endless conveyor and that, furthermore, these arms allow such a half 2 to move substantially vertically.

The rotation axle 3 in Fig. 2C is inserted through the above-mentioned axle guides 15 and is, furthermore, connected to the endless conveyor and is, generally, perpendicular to the direction of travel, for instance the direction of the conveying chain (not represented).

In Fig. 2D, the locking element 9 is shown in more detail. When being slid over the central rotation axle 3 and inserted into a locking cavity half 10 of the same shape, a fitting end 11 connected to an axle shaft 12 and having, in the embodiment shown, the shape of a truncated pyramid, will press the halves together and keep them together through friction. This pressing takes place by having a cam following element 13, connected to the other end of the axle shaft 12, follow a cam movement such that on a particular part of the transport path, locking element 9 is pressed inwards and performs the above-described function. For as long as the halves 2 are to remain centered, i.e. during rotation of the products in order to have them depicted, the locking element remains pressed-in.

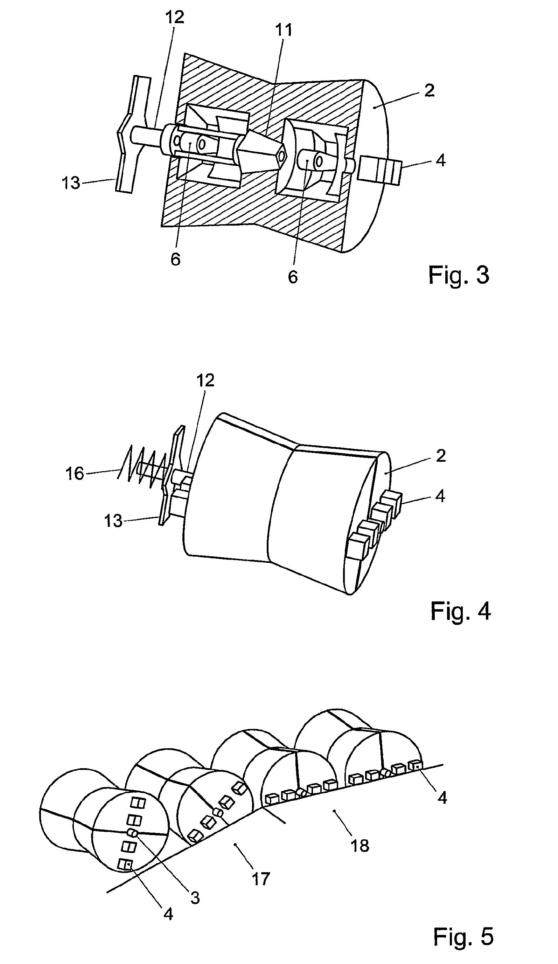

In Fig. 3, the above-described parts have been fitted into one half 2. For clarity's sake, the locking element 9 has also been inserted into the half 2 and it can be seen how fitting end 11 fits into the locking cavity half 10 and thus maintains the half in its place.

In Fig. 4, a diabolo, centered and locked to form a whole is indicated, while the pressing action is represented by a clamping spring 16, shown here in combination with the cam following element 13. This is a different but also realizable manner of pressing-in and maintaining locked.

In Fig. 5 it is indicated how the diabolo halves 2 are positioned for weighing. It has already been elucidated hereinabove that for weighing, the halves 2 should not be locked. This means that a possible locking prior to the weighing should be abandoned but also that all halves are to be brought into the proper position. In Fig. 5 it is indicated how the halves with support points 4 are passed over an upward guide 17 towards a horizontal weighing surface of a weighing cell 18. It will be clear that because of the scale of this Figure, it cannot be seen that the halves are, in principle, not locked, and moreover that this locking must be abandoned at least immediately prior to reaching the weighing cell.

The articles A will be located between two halves 2 while the dimensioning of the different parts as described hereinabove is such that, when being dragged over the weighing cell 18, the pivot arms, more in particular the connecting line between the axle centers of the diabolo axle guide and the pivot arm axle fitting in the pivot arm axle cavity, will come to lie horizontally to thus avoid moments of force which may disturb the weighing.

It is further noted that also in case no locking element is included for locking the halves, specifically with very small intermediate distances between the halves and with less high conveying speeds, a good rotation of the objects is obtained. Furthermore, this gives an apparatus in which the conveying elements consist of less parts.

It will be clear to any skilled person that minor and evident modifications are possible and fall within the range of the accompanying claims.

## Claims

1. A diabolo roller conveyor provided with rotation axles (3) with diabolo rollers mounted thereon, each diabolo roller being divided into two diabolo roller halves (2) by an imaginary dividing plane in which the rotation axle (3) too extends, a locking element (9) being provided having a locked position and a releasing position, while each diabolo roller half (2) is connected to the rotation axle (3) via at least one weighing guide element such that in the releasing position this allows an independent movement of each diabolo roller half (2) parallel to the imaginary plane and perpendicular to the rotation axle_ (3) for the purpose of weighing an object (A) located on the respective diabolo roller half (2) and that in a locked position, the two diabolo roller halves (2) are intercoupled and rotatably drivable through rotation of the rotation axle (3).

2. A diabolo roller conveyor according to claim 1, wherein the weighing guide elements comprise at least one single pivot arm (6) connected to, on the one side, such one half and on the other side, to a rotation axle (3) common for both halves (2).

3. A diabolo roller conveyor according to claim 2, wherein, when weighing, the pivot arm (6) is horizontal.

4. A diabolo roller conveyor according to claim 1, 2 or 3, wherein, when rotating, the two halves (2) are locked with the aid of a locking element (9) while the halves (2) are centered.

5. A diabolo roller conveyor according to claim 4, wherein the locking element (9) is a fitting element, comprising a central axle shaft (12) which, upon locking, is slid over the rotation axle (3) and is inserted into the halves (2), while a fitting end (11) fits in matching locking cavity halves (10) of matching halves (2), while these halves (2) are pressed together and locked in a mutually centered position.

6. A diabolo roller conveyor according to claim 5, wherein the fitting end (11) comprises a truncated four-sided pyramid tapering towards the end.

7. A diabolo roller conveyor according to claim 5, wherein the fitting end (11) comprises a truncated oval cone tapering towards the end.

8. A diabolo roller conveyor according to claim 5, 6 or 7, wherein the fitting element (11) is held in locked position by a clamping spring (16) pressing against the axle shaft (12) in the direction of the rotation axle (3).

9. An apparatus provided with a diabolo roller conveyor according to any one of the preceding claims, wherein the apparatus (1) comprises a weighing cell (18) over which the diabolo rollers, provided with supporting elements (4), are guided by the supporting elements (4), while the locking element (9) of a respective diabolo roller is in the releasing position when a diabolo roller is guided over the weighing cell (18), the locking element (9) being in the locked position when rotation of the diabolo roller is required.

## Patentansprüche

1. Diabolo-Rollenförderer mit Drehachsen (3), auf denen Diabolo-Rollen angebracht sind, von denen jede durch eine imaginäre Trennebene, in welcher auch die Drehachse (3) verläuft, in zwei Diabolo-Rollenhälften (2) geteilt ist, und mit einem Verriegelungselement (9) mit einer Verriegelungsstellung und einer Freigabestellung, wobei jede Diabolo-Rollenhälfte (2) mit der Drehachse (3) über mindestens ein Wägeführungselement derart verbunden ist, dass in der Freigabestellung eine unabhängige Bewegung jede Diabolo-Rollenhälfte (2) parallel zu der imaginären Ebene und senkrecht zur Drehachse (3) zum Zwecke des Wägens eines Gegenstandes (A) auf der jeweiligen Diabolo-Rollenhälfte (2) möglich ist und in der Verriegelungsstellung die beiden Diabolo-Rollenhälften (2) miteinander gekoppelt und durch die Drehung der Drehachse (3) drehantreibbar sind.

2. Diabolo-Rollenförderer nach Anspruch 1, bei dem die Wägeführungselemente mindestens einen einzelnen Schwenkarm (6) umfassen, der an einem Ende mit der einen Hälfte und an dem anderen Ende mit einer beiden Hälften (2) gemeinsamen Drehachse (3) verbunden ist.

3. Diabolo-Rollenförderer nach Anspruch 2, bei dem beim Wägen der Schwenkarm (6) horizontal ist.

4. Diabolo-Rollenförderer nach Anspruch 1, 2 oder 3, bei dem bei der Drehung die beiden Hälften (2) mittels eines Verriegelungselementes (9) verriegelt sind, während die Hälften (2) zentriert sind.

5. Diabolo-Rollenförderer nach Anspruch 4, bei dem das Verriegelungselement (9) ein Passstück ist, welches eine zentrale Achswelle (12) umfasst, die bei der Verriegelung über die Drehachse (3) geschoben und in die Hälften (2) eingefügt wird, während ein Passende (11) in passende Verriegelungsausnehmungshälften (10) der passenden Hälften (2) passt, während diese Hälften (2) zusammengedrückt werden und in der aneinander zentrierten Position verriegelt sind.

6. Diabolo-Rollenförderer nach Anspruch 5, bei dem das Passende (11) ein an vier seitigen Pyramidenstumpf umfasst, der sich gegen das Ende hin verjüngt.

7. Diabolo-Rollenförderer nach Anspruch 5, bei dem das Passende (119 einen ovalen Kegelstumpf aufweist, der sich gegen das Ende hin verjüngt.

8. Diabolo-Rollenförderer nach Anspruch 5, 6 oder 7 bei dem das Passelement (11) durch eine Klemmfeder (18), die gegen die Achswelle (12) in Richtung der Drehachse (3) drückt, in der Verriegelungsposition gehalten wird..

9. Vorrichtung mit einem Diabolo-Rollenförderer nach einem der vorangehenden Ansprüche, bei der die Vorrichtung (1) eine Wägezelle (18) umfasst, über die mit Tragelementen (4) ausgerüstete Diabolo-Rollen durch die Tragelemente (4) geführt werden, wobei das Verriegelungselement (9) einer Diabolo-Rolle sich in der Freigabeposition befindet, wenn die Diabolo-Rolle über die Wägezelle (18) geführt wird und wobei das Verriegelungselement (9) sich in der Verriegelungsstellung befindet, wenn eine Drehung der Diabolo-Rolle erforderlich ist.

## Revendications

1. Transporteur à rouleaux en forme de diabolo équipés d'axes de rotation (3) avec des rouleaux en diabolo montés sur ceux-ci, chaque rouleau en diabolo étant divisé en deux moitiés de rouleau en diabolo (2) par un plan de division imaginaire dans lequel se trouve également l'axe de rotation (3), un élément de blocage (9) étant prévu ayant une position bloquée et une position de libération, tandis que chaque moitié de rouleau en diabolo (2) est reliée à l'axe de rotation (3) via au moins un élément de guidage de pesée de façon que, dans la position de libération, cela permette un mouvement indépendant de chaque moitié de rouleau en diabolo (2) parallèlement au plan imaginaire et perpendiculairement à l'axe de rotation (3) dans le but de peser un objet (A) situé sur la moitié de rouleau en diabolo respective (2) et que, dans une position bloquée, les deux moitiés de rouleau en diabolo (2) soient assemblées et entraînées de façon rotative par la rotation de l'axe de rotation (3).

2. Transporteur à rouleaux en diabolo selon la revendication 1, dans lequel les éléments de guidage de pesée comprennent au moins un bras de pivot unique (6) relié, d'un côté, à une moitié et, de l'autre côté, à un axe de rotation (3) commun aux deux moitiés (2).

3. Transporteur à rouleaux en diabolo selon la revendication 2, dans lequel, lors de la pesée, le bras de pivot (6) est horizontal.

4. Transporteur à rouleaux en diabolo selon la revendication 1, 2 ou 3, dans lequel, lors de la rotation, les deux moitiés (2) sont bloquées avec l'aide d'un élément de blocage (9), tandis que les moitiés (2) sont centrées.

5. Transporteur à rouleaux en diabolo selon la revendication 4, dans lequel l'élément de blocage (9) est un élément d'ajustement, comprenant un arbre à axe central (12) qui, lors du blocage, est glissé sur l'axe de rotation (3) et est introduit dans les moitiés (2), tandis qu'une extrémité d'ajustement (11) s'adapte dans des moitiés à cavité de blocage correspondantes (10) de moitiés correspondantes (2), tandis que ces moitiés (2) sont pressées ensemble et bloquées dans une position mutuellement centrée.

6. Transporteur à rouleaux en diabolo selon la revendication 5, dans lequel l'extrémité d'ajustement (11) comprend une pyramide tronquée à quatre côtés diminuant progressivement vers l'extrémité.

7. Transporteur à rouleaux en diabolo selon la revendication 5, dans lequel l'extrémité d'ajustement (11) comprend un cône tronqué ovale diminuant progressivement vers l'extrémité.

8. Transporteur à rouleaux en diabolo selon la revendication 5, 6 ou 7, dans lequel l'élément d'ajustement (11) est maintenu en position bloquée par un ressort de serrage (16) exerçant une pression contre l'arbre à axe (12) dans la direction de l'axe de rotation (3).

9. Appareil muni d'un transporteur à rouleaux en diabolo selon une quelconque des revendications précédentes, dans lequel l'appareil (1) comprend une cellule de pesée (18) sur laquelle les rouleaux en diabolo, munis d'éléments de support (4), sont guidés par les éléments de support (4), tandis que l'élément de blocage (9) d'un rouleau en diabolo respectif est dans la position de libération quand un rouleau en diabolo est guidé sur la cellule de pesée (18), l'élément de blocage (9) étant dans la position bloquée quand la rotation du rouleau en diabolo est demandée.
